# EUROPEAN PATENT APPLICATION

(11) **EP 3 629 309 A2**
(43) Date of publication of application: **01.04.2020**
(21) Application number: 19200581.7
(22) Date of filing: 30.09.2019
(51) Int. Cl.: G08B 13/196, B64C 39/02, H04W 4/44

(54) **DRONE REAL-TIME INTERACTIVE COMMUNICATIONS SYSTEM**

(30) Priority: 28.09.2018 US 201862738854 P
(71) Applicant: Luong, Quoc, Castro Valley, CA 94546 (US)
(72) Inventor: Luong, Quoc, Castro Valley, CA 94546 (US)
(74) Representative: Pons

(57) **Abstract**

A drone communications system includes a drone having a plurality of sensors, wherein each of the plurality of sensors collects a stream of data. A ground control system is in communication with the drone and the plurality of sensors. At least one communications device is included. A communications server is in communication with the drone, the ground control system, and the at least one communications device. Each stream of data from the plurality of sensors is transmitted to the communications server, and the communications server transmits the stream to the ground control system and at least one communications device in real time. In another embodiment, each stream of data is first transmitted to the ground control system or to nodes in a mesh network, where the stream of data is authorized and then transmitted to at least one communications device in real time.

## Description

### FIELD OF THE DISCLOSURE

The present disclosure is generally related to aerial drones and more particularly is related to real-time drone communication systems.

### BACKGROUND OF THE DISCLOSURE

Aerial drones are used by the military, police, firefighters, and other groups to provide visual and other information about a scene from a high vantage point. Drones are traditionally controlled by a ground control center (GCS) that can see information from sensors on the drone, including cameras, ranging sensors, temperature sensors, and the like. The GCS is the single point of contact for the drone - all of the information flows to the hardware and the person or people operating it. In current systems, this also means that operators at the GCS are responsible for communicating information obtained by the drone to other operatives in the field. This style of relay can lead to a number of complications: delayed communications, cumbersome communication protocols by radio or walkie-talkie, inaccurate translation of important data, and ineffective translation of data medium (for instance, describing visual data using verbal communications).

Complications in communication can put field operatives at a disadvantage. Delayed and cumbersome communication techniques require operatives to place focus on the communications rather than on the task in the field. Inaccurate or untimely communication can make operations more difficult and even endanger field operatives who may be operating without important information. And teams of operatives without accurate and timely information may work against each other if they do not all possess the same information about a field situation. It is therefore imperative to improve communications and data distribution among operatives in these scenarios.

Thus, a heretofore unaddressed need exists in the industry to address the aforementioned deficiencies and inadequacies.

### SUMMARY OF THE DISCLOSURE

Embodiments of the present disclosure provide a system and method for drone communications. Briefly described, in architecture, one embodiment of the system, among others, can be implemented as follows. At least one drone has a plurality of sensors, wherein each of the plurality of sensors collects a stream of data. A ground control system is in communication with the at least one drone and the plurality of sensors. At least one communications device is provided. A communications server is in communication with the at least one drone, the ground control system, and the at least one communications device, wherein each stream of data from the plurality of sensors is transmitted to the communications server, and wherein the communications server transmits the stream to the ground control system and at least one communications device in real time.

In one aspect of the system, each stream of data from the plurality of sensors is combined to a single stream, wherein the single stream is transmitted to the communications server.

In another aspect of the system, each stream of data is transmitted to at least two communications devices located remote from one another.

In yet another aspect of the system, the stream of data further comprises a visual image captured from a position of the at least one drone.

In this aspect of the system, the visual image captured from the position of the at least one drone is displayed on the at least one communications device.

In this aspect of the system, at least one annotation is visually overlaid on the visual image.

In another aspect of the system, the at least one communications device further comprises at least one of: a smart phone, a tablet computer, a smart watch, a laptop, an augment reality computerized device, a virtual reality computerized device, a wearable computerized device or a computerized device with a plurality of sensors.

In another aspect of the system, the at least one communications device has at least one GPS chip therein, wherein a location of the at least one communications device is visually overlaid on a visual image captured from a position of the at least one drone.

The present disclosure can also be viewed as providing a drone communications system. Briefly described, in architecture, one embodiment of the system, among others, can be implemented as follows. At least one drone has a plurality of sensors, wherein each of the plurality of sensors collects a stream of data. A ground control system is in communication with the at least one drone and the plurality of sensors. At least one communications device is provided. A communications server is in communication with the at least one drone, the ground control system, and the at least one communications device, wherein each stream of data from the plurality of sensors is transmitted to the ground control system, wherein the ground control system transmits the stream of data to the communications server, and wherein the communications server transmits the stream of data to at least one communications device in real time.

In one aspect of the system, each stream of data from the plurality of sensors is transmitted to the ground control system via nodes in a mesh network, wherein the nodes are capable of receiving the stream of data and transmitting the stream of data to: another node, another sensor, or a drone.

In another aspect of the system, the stream of data further comprises sensed data and associated metadata, wherein the sensed data and the associated metadata are encoded together into the stream of data.

In yet another aspect of the system, each stream of data from the plurality of sensors is combined to a single stream, wherein the single stream is transmitted to the communications server.

In another aspect of the system, the stream of data further comprises a visual image captured from a position of the at least one drone.

The present disclosure can also be viewed as providing methods of communicating data from a drone. In this regard, one embodiment of such a method, among others, can be broadly summarized by the following steps: collecting streams of data with a plurality of sensors, respectively, positioned on at least one drone; transmitting each stream of data to a communications server; and transmitting each stream of data from the communications server to: a ground control system in communication with the at least one drone and the at least one sensor; or at least one communications device in real time.

In one aspect of the method, each stream of data from the plurality of sensors is combined into a single stream, wherein the single stream is transmitted to the communications server.

In another aspect of the method, each stream of data is transmitted to at least two communications devices located remote from one another.

In yet another aspect of the method, the stream of data further comprises a visual image captured from a position of the at least one drone.

In this aspect of the method, the visual image captured from the position of the at least one drone is displayed on the at least one communications device.

In this aspect of the method, at least one annotation is visually overlaid on the visual image.

In another aspect of the method, a location of the at least one communications device is visually overlaid on a visual image captured from a position of the at least one drone.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1 is an illustration of the drone communications system deployed in a field setting, in accordance with a first exemplary embodiment of the present disclosure.
FIG. 2 is an illustration of a drone element of the drone communications system, in accordance with the first exemplary embodiment of the present disclosure.
FIG. 3 is a diagram showing the communications elements of the drone communications system, in accordance with the first exemplary embodiment of the present disclosure.
FIG. 4 is a diagram showing the transmission of aerial imagery and aerial data from a drone in the field to all other devices within the network, in accordance with the first exemplary embodiment of the present disclosure.
FIG. 5 is an illustration showing a combined display feed on a ground control system, in accordance with the first exemplary embodiment of the present disclosure.
FIG. 6 is a diagram showing the real-time tracking of identifiers and location data of communications devices, in accordance with the first exemplary embodiment of the present disclosure.
FIG. 7 is a diagram showing the real-time transmission of commands and annotation data to all communications devices, in accordance with the first exemplary embodiment of the present disclosure.
FIG. 8 is a diagram showing the drone communications system in a configuration where the communications server and other networks cannot be reached, in accordance with the first exemplary embodiment of the present disclosure.
FIG. 9 is a flowchart illustrating a method of communicating data from a drone, in accordance with the first exemplary embodiment of the present disclosure.

### DETAILED DESCRIPTION

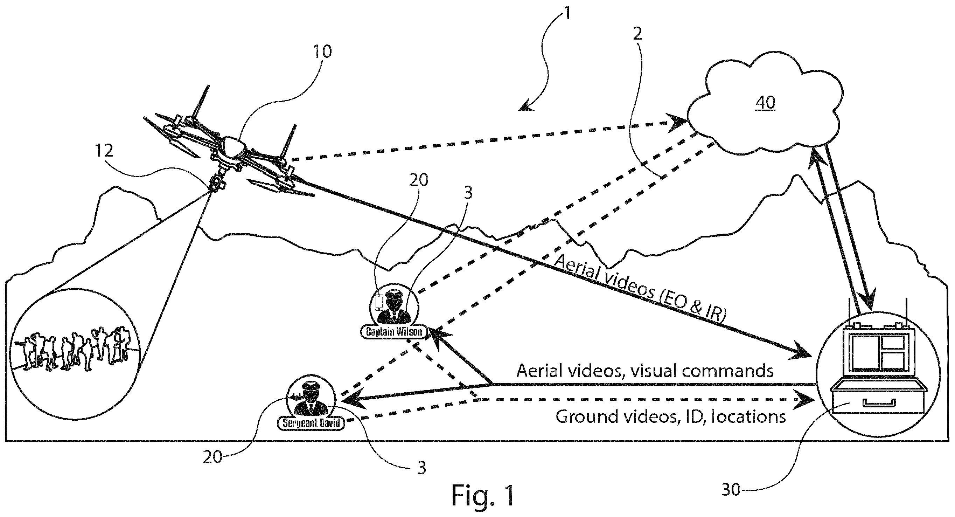

FIG. 1 is an illustration of the drone communications system 1 deployed in a field setting, in accordance with a first exemplary embodiment of the present disclosure. The drone communications system 1 (hereinafter "drone system 1") includes a drone 10 having a plurality of sensors 12, wherein each of the plurality of sensors 12 collects a stream of data. A ground control system 30 is in communication with the drone 10 and the plurality of sensors 12. At least one communications device 20 is included. A communications server 40 is in communication with the drone 10, the ground control system 30, and the at least one communications device 20. Each stream of data from the plurality of sensors 12 is transmitted to the communications server 40 or to another device, depending on the design of the system 1. In one example, the data stream is transmitted to the communications server 40, which then transmits the stream to the ground control system 30 and the at least one communications device 20 in real time. In another example, each stream of data from the plurality of sensors is transmitted to the ground control system 30 directly, and the ground control system 30 transmits the stream to the communications server 40, and the communications server 40 transmits the stream to the at least one communications device 20 in real time. In yet another example, each stream of data from the plurality of sensors is transmitted to nodes in a mesh network, which can relay the stream to other nodes, to the control system 30, the communications server 40, and/or other drones or communications devices 20 in real time.

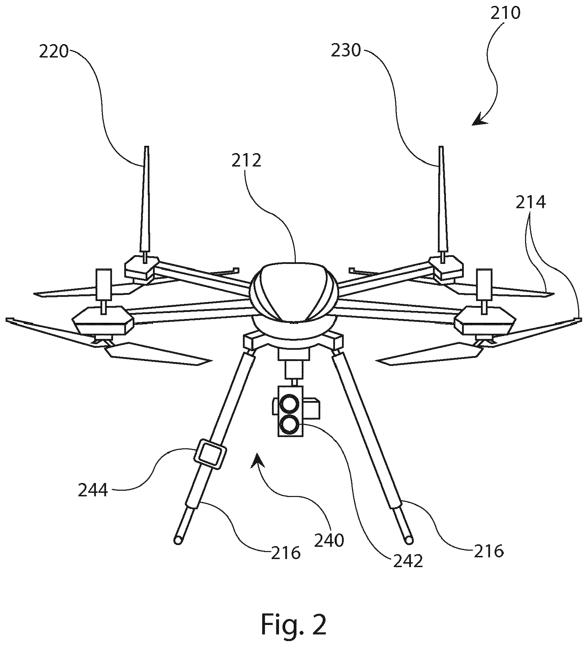

The drone 10 may be any type of unmanned vehicle, such as an aerial drone, UAV, remotely-controlled car, watercraft, and the like. As an example, FIGS. 1-2 make reference to an unmanned aerial drone. However, any type or combination of drones may be considered to be within the scope of this disclosure. The drone 10 may be capable of unmanned travel with or without a payload. The drone 10 may include one or more sensors, receivers, and transmitters, as discussed further relative to FIG. 2.

The communications devices 20 may be devices that receive or transmit data within the drone system 1. In one example, the communications devices 20 may be portable devices capable of receiving drone data such as video and sensor information. Operatives in the field may use the communications devices 20 to provide enhanced field information like aerial imaging. The communications devices 20 may be devices such as smart phones, tablets, smart watches, laptops, augmented and virtual reality glasses, wearables, gimballed cameras, body cameras, through-the-wall imaging (TWRI) and radar devices, and the like. The communications device can also be carried by an operative such as mobile phone or body camera or can be mounted to another aerial drone, UAV, remotely-controlled car, on a man or unmanned ground vehicle or a water ship. The communications devices 20 may have visual displays, speakers, and tactile responses to convey drone and other data. In another example, the communications devices 20 may be sensor devices that can transmit additional field data to complement the drone data. For instance, the communications devices 20 may be portable cameras, wearable cameras or other sensors, or deployed sensors. Field operatives may use wearable cameras, for instance, to provide on-the-ground video imaging in particular areas of the field. Additionally, field operatives may deploy motion sensors at strategic points within the field to alert operators at the ground control system 30 of movement. In another example, communications devices 20 may both transmit and receive data related to the field operation. For example, at least one visual image, such as on-the-ground video, photograph, or other imagery data which is taken by the communications device can be transmitted to the communications server, which then transmits the visual image to the ground control system. The same functionality may be used with non-visual data, such as audio recordings, GPS coordinates, or any other data files.

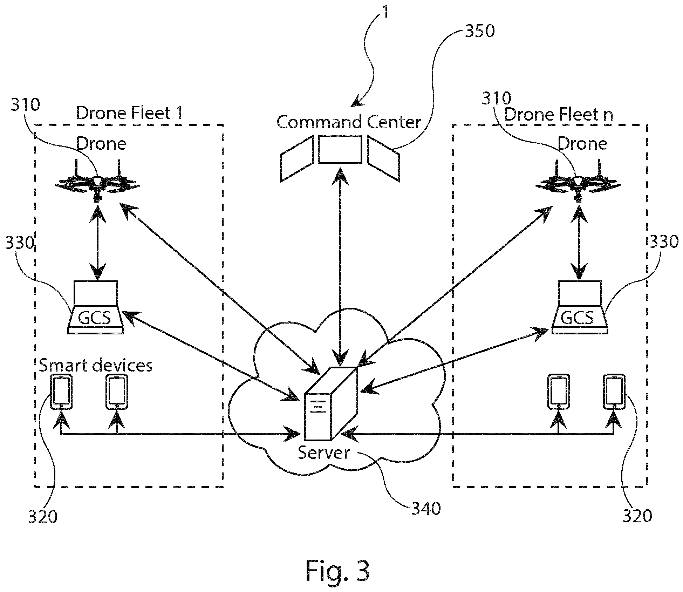

The ground control system 30 may be a permanent or portable computer system used to command the drone 10 and direct any operatives or other devices within the field. The ground control system 30 may have a visual display for displaying drone data, such as camera feeds and operating information, and well as one or more data entry devices, including a keyboard, mouse, or joystick. The ground control system 30 may additionally transmit data from the drone 10 to the communications server 40 when data transfer from drone - ground control system - communications server would be faster or more secure than from the drone 10 to the communications server 40 directly, as discussed further relative to FIG. 3.

The communications network 2 may be one or more wireless and wired networks including the drone 10, communications devices 20, ground control system 30, and communications server 40. In one example, the communications network 2 may include wireless networks such as satellite, cellular, radio frequency, Wi-Fi®, Bluetooth®, or any combination thereof. For example, sensors 12 may communicate with the drone 10 using Bluetooth® protocols, while the drone 10 communicates with the communications server 40 using Wi-Fi® protocols. The communications server 40 may communicate with the various communications devices 20 using cellular, Wi-Fi®, or wired network connections, including internet and intranet networks. Sensors on the communications devices 20 may communicate data to the devices 20 using wired, Bluetooth®, Wi-Fi®, or NFC communications. Additionally, the drone 10 may navigate or track objects in the field using GPS or other satellite navigation systems. The networks used may be automatically selected by the drone 10, communications devices 20, ground control system 30, or other devices within the network based on the amount of data to be transmitted, the strength, speed, or reliability of the network connection, and other factors. A combination of networks may be selected to transmit one or more types of data, or one or more packets of the same type of data.

The communications server 40 may be a cloud computer server in network communication with the drone 10, communications devices 20, ground control system 30, and other devices over the communications network 2. The communications server 40 may include a computer processor for processing communications data, a computer storage medium for storing communications data, and hardware for receiving and transmitting communications data within the network 2. The communications server 40 may be a distributed server located in multiple locations and including multiple hardware elements.

In the example shown in FIG. 1, a drone 10 is being used to provide aerial imaging of targets in a mountainous region. Field operatives 3 are in the field with communications devices 20. The drone 10 and communications devices 20 are in communication with a ground control system 30 directly or via the communications server 40, transmitting captured data from the field. The ground control system 30 is transmitting aggregated data to the communications devices 20 via the communication server 40.

FIG. 2 is an illustration of a drone element 10 of the drone communications system 1, in accordance with the first exemplary embodiment of the present disclosure. As an example, an aerial drone 210 may include components such as a housing 212, propellers 214, and legs 216. The aerial drone 210 may include at least one transmitter 220 and receiver 230 for transmitting data and receiving commands, respectively. The transmitter 220 and receiver 230 may be in communication with a ground control system. The receiver 230 may receive commands from one or more operators using the ground control system. The transmitter 220 may send sensor data that the one or more operators may use to dictate the aerial drone 210's operations. The transmitter 220 may additionally be in communication with a communications server to transmit data to other users and devices within the communications network, as discussed further relative to FIG. 3.

The drone 210 may include one or more sensors 240 for capturing information in the field. For instance, the drone 210 may include a camera 242, which may capture images in one or more portions of the electromagnetic spectrum, for instance, visible, infrared, ultraviolet, or radio wave portions. A combination of cameras 242 may capture multiple portions of the electromagnetic spectrum in concert, for instance, the visible and infrared portions. The camera 242 may be a still camera or video camera. By way of example, the camera 242 may be a Sony electro-optical camera with 4k resolution and 30X equivalent optical zoom as well as a FLIR thermal 640x512 resolution infrared camera with changeable lens. The camera 242 may be mounted by a gimbal that allows remote-controlled movement and zooming.

The drone 210 may include additional sensors 244 for collecting field data, such as altitude sensors, position sensors, ranging sensors, accelerometers, electrical or magnetic field sensors, motion detectors, weather and environment sensors, radiation sensors, communications antennas, and the like. The additional sensors 244 may transmit collected data to a ground control station or to the communications server. The data may be transmitted separately from the image data captured by the camera 242, or it may be included as metadata with the image data.

The drone 210 may track the position of operatives in the field. In one example, this may be accomplished by using GPS information from the communications devices 20, machine learning, neural network, or computer vision techniques that identify the operatives using software processing. In another example, the operatives may transmit location data that can be combined with the drone 210's sensor data to provide a visual position indicator. A combination of software and hardware techniques may be used to achieve high resolution or more contemporaneous location data than using a single technique alone.

FIG. 3 is a diagram showing the communications elements of the drone communications system 1, in accordance with the first exemplary embodiment of the present disclosure. The communications elements may include at least one drone 310, communications devices 320, ground control station 330, and communications server 340, as described above. The communications elements may also include a command center 350 networked with the communications server 340. The command center 350 may oversee all of the operations of the drone communications system 1.

All of the communications shown herein may be transmitted and received in real time or near real-time, which is to say without significant delay between the data being collected and a user being able to view the data. In one example, the delay may be less than one second between data collection and user viewing on any or all devices. Preferably, the delay may be less than half of one second. Even more preferably, the delay may be less than 0.3 seconds. Additionally, all of the data within the communications may be synchronized. In other words, multiple video transmissions from a number of devices within the network may be synchronized so that a user viewing the multiple videos simultaneously may view each video at the same standard time. Sensor and other device data may be synchronized as well. This may provide users with time-accurate video and other data from the field. In another example, the multiple videos may include different types of videos, such as visual videos and thermal videos, or others types of videos to the ground control station 330.

In one example, aerial imagery and aerial data from drone 310 to communications devices 320 may be transmitted in real time via radio frequency, cellular, and other networks. For example, a drone 310 may record high definition visible video, thermal video using infrared or thermal sensors, and other metadata using onboard sensors, then encode the data with the video and stream the encoded video to the ground control station 330 via direct radio frequency link. The ground control station 330 may receive the encoded video, decode it, store it on digital storage, and display the video with the included metadata on a screen for the ground control operators to use.

The ground control station 330 may resize the multiple video feeds to optimally fit the displays of communications devices 320 within the network. The resized videos may be encoded and combined into a single stream in order to minimize transmission bandwidth. The single stream may be transmitted to the communications server 340. The communications server 340 may receive the encoded single stream and configure it in such a way that pre-authorized communications devices 320 on the network can receive and display the stream and accompanying metadata. This may require one or more levels of encryption, device authorization, restricted networks, and the like.

Communications devices 320 may receive the encoded single stream and may display or otherwise process the data contained therein. Simultaneously, the communications devices 320 may be collecting data through cameras or other sensors in the field. This data and associated metadata may be encoded together, transmitted to the communications server 340, and transmitted to other communications devices 320, ground control system 330, and the command center 350.

In another example, aerial imagery and metadata is transmitted from drone 310 to all devices using a cellular or Wi-Fi® network. The drone 310 may capture high definition video, thermal video, and other field data using onboard sensors. The videos may be resized to optimally fit a communications device display, encoded with the field data, and combined into a single stream to minimize the transmission bandwidth required. The combined videos and data may be transmitted to the communications server 340 using a cellular or Wi-Fi® network. The communications server 340 may receive and process the video and data transmission for transmission only to authorized devices within the network.

Authorized communications devices 320, the ground control station 330, and the command center 350 may receive the video and data transmission from the communications server 340, and may display, play, or otherwise process the video and data transmission.

In another example, imagery and data from one or more communications devices 320 may be transmitted to other communications devices 320, the ground control system 330, and the command center 350 on the network. The imagery and data may require authorization from a user at the ground control system 330 or command center 350 before it can be transmitted. If authorization is provided, the one or more communications devices 320 may transmit data such as images, video feeds, or sensor data to the communications server 340. The communications server 340 may receive the transmitted data and transmit it further to one or more other devices on the network.

In another example, communications devices 320 in the field may include GPS chip or tracking hardware. Communications devices 320 having GPS tracking hardware may transmit a data stream including a device or user identifier, GPS coordinates, rate and direction of travel, and other location data to the communications server 340. The communications server 340 may process the location data for transmission to authorized communications devices 320, ground control systems 330, the command center 350, or any combination thereof. Such processing may include encryption, password protection, or other forms of selective authorization. Any devices receiving the location data may display the operatives' ID, rate and direction of travel, historical trajectories, and the like therein. In one example, the location data may be visually overlaid over drone videos, maps, or other images representing the field. This may enable field operatives and commanders to easily determine the current positions as well as past movements of any users and devices in the field. In another example, location data may be relayed through auditory or tactile processes. Location data may be synchronized across all authorized devices upon receiving the location data transmission. This may allow all authorized users to see real-time location data for relevant field operatives.

In another example, commands and other annotations may be transmitted from users of a ground control system 330 or a command center 350 to one or more communications devices 320 within the network. A user of the ground control system 330 or command center 350 may enter commands by use of mouse, keyboard, touchscreen, voice dictation, or other means. The user may include text or other visual annotations by typing, placing images onto the map or video, or drawing. The commands and annotations may be transmitted to the communications server 340 in real time. The communications server 340 may process the commands and annotations for transmission to authorized communications devices 320 to receive. The authorized communications devices 320 may receive the commands and annotations and display or otherwise process them. In one example the commands and annotations may be overlaid on one or more drone video feeds, maps, or other visual representations of the field. Examples of annotations may include labels, drawings, enhancement of specific areas or items, and the like. For instance, an item identified as a hazardous material on the map may be annotated as such so that field operatives can use caution around the item. Examples of commands may include text instruction, directional indicators, waypoints, target markers, and the like. For instance, a user may instruct a field operative to proceed to a target via a certain direction and engage. The field operative may see directional arrows, waypoint markers, and a target indicator appear on his device's display. Commands may additionally include text, voice messaging, and/or a voice call, which may be displayed in a separate portion of the user interface. Commands and annotations may be automatically synchronized to all authorized devices upon receiving the transmission.

In another example, an administrator of the network may communicate administrative changes to system settings in real time. An administrator may be a user at the command center 350, ground control system 330, or a communications device 320. The administrator may communicate directly with the communications server 340 with instructions to grant, deny, or cancel authorized access of any device to data or other devices within the network. The communications server 340 may transmit these instructions to all devices within the network, which may receive the instructions and execute them accordingly.

As a point of clarification, the communications devices 320 shown in FIGS. 3-8 are illustrated as smartphone or tablet devices by way of example only. Other devices may be included within the scope of this disclosure, including computers, wearable cameras, gimballed cameras, smartwatches, and augmented or virtual reality glasses. These communications devices can be worn by operatives or mounted on another aerial drone, UAV, remotely-controlled car, watercraft, and the like. In particular, augmented reality glasses may be communications devices 320 capable of receiving visible and thermal video streams with less than one second latency, transmitting camera video from cameras on the augmented reality glasses to the ground control system 330 or command center 350 with 0.3 second latency, transmitting identifier and location data to the ground control system 330 or command center 350, and displaying visual commands on the augmented reality glasses displays.

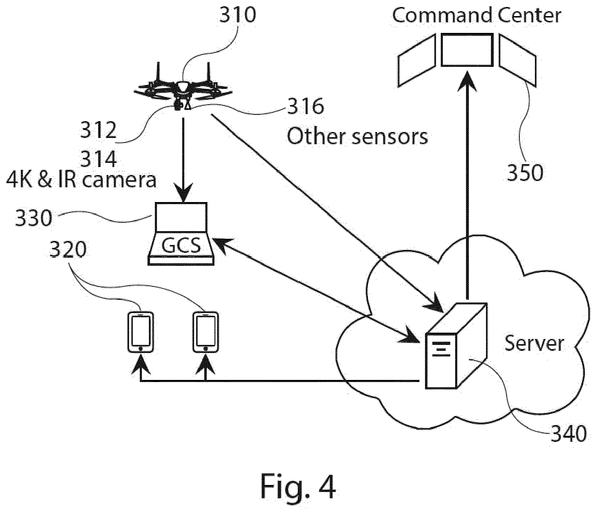

FIG. 4 is a diagram showing the transmission of aerial imagery and aerial data from a drone 310 in the field to all other devices within the network. The drone 310 may capture aerial imagery using a visible camera 312 having 4K high definition video and a thermal camera 314. The visible video may be down converted to 720p resolution using a codec such as H.264 or other suitable encoding scheme, while the thermal video may be encoded to 640x512 resolution using a similar codec. The videos may be transmitted to the ground control system 330 using a direct radio frequency link. Data output from other sensors 316 may be transmitted to the ground control system 330 via a direct radio frequency link using a protocol such as MAVIink2. The ground control system 330 may receive the visible, thermal, and other sensor data, decode it, and display the aggregated data on the ground control system 330 display. The visual video and thermal video may be combined by the ground control system 330 into a single stream and encoded, then transmitted to the communications server 340 with a minimum buffer frame rate. Communications devices 320 may establish a network connection with the communications server 340 and receive a transmission containing the combined visible and thermal video and other aerial data. The communications devices 320 may decode and display the received transmission data using the device displays.

In another example, the visible and thermal video may be down converted and combined within the drone 310 itself, then transmitted to the communications server 340 directly via Wi-Fi® or cellular network. Data from other sensors 316 may be transmitted directly to the communications server 340 as well. The ground control system 330, communications devices 320, and command center 350 may establish a connection with the communications server 340 and may receive a transmission of the combined video and aerial data.

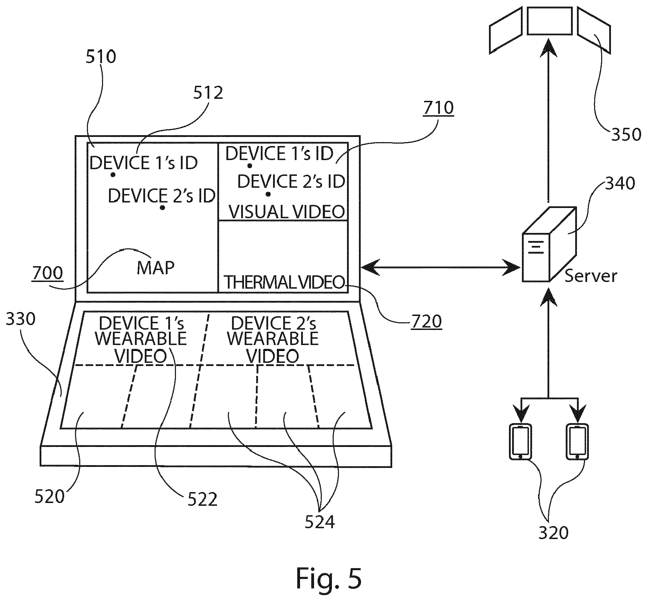

FIG. 5 is a diagrammatical illustration showing a combined display feed on a ground control system 330. In one example, the ground control system may have an upper display area 510 and a lower display area 520. The upper display area 510 may be divided into display sections 700, 710, 720 showing a field map, visible video, and thermal video, respectively. The field map section 700 may show the positions of drones, field operatives, the area the cameras are covering, e.g., in the form of a light beam displayed on the ground surface, and all communications devices 320 within a field of interest. Positions may be indicated by labels 512 around each device or operative. The visible video section 710 may show the visible video feed from one or more drones. The thermal video section 720 may show the thermal video feed from one or more drones. The lower display area 520 may be divided into multiple device display sections 524 showing video feeds from one or more communications devices 320. The communications devices 320 may transmit video to the communications server 340, which may transmit all of the videos to the ground control system 330. A user of the ground control system 330 may select one or more communications devices 320 indicated on the map section 700, and that particular device's video feed may be displayed on a section 524 of the lower display 520. Each video feed may be indicated by a label 522. In one example, the ground control system 330 does not receive all communications device 320 video feeds simultaneously. Instead, in response to a user selecting a feed from the field map 700, the ground control system 330 may send a request to the communications server 340, which may be transmitted to the communications device 320. The operator of the communications device 320 may receive the request and begin transmitting the device video to the communications server 340. The communications server 340 may transmit the video to the ground control system 330, where it may be displayed on the lower display. Any data and video streams may be available to the command center 350 using the same protocols.

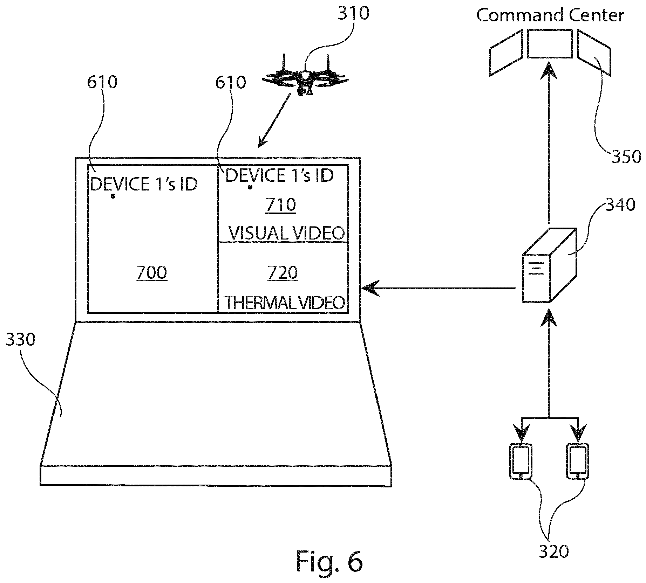

FIG. 6 is a diagram showing the real-time tracking of identifiers and location data of communications devices 320. Communications devices 320 may transmit identifiers and location data to the communications server 340 as discussed above. The data may be accessible by authorized devices, the ground control system 330, and the command center 350 through the communications server 340. The communications server 340 may transmit identifiers and location data to all authorized receiving devices 320, 330, 350 in real time.

In one example, the ground control system 330 may include a display area that is divided into display sections 700, 710, 720. Visible and thermal video from a drone 310 may be directly transmitted to the ground control system 330 and displayed on visible video section 710 and thermal video section 720, respectively. Map section 700 may display a map of the field with real-time location data from the communications devices 320 displayed thereon. Communications devices may be indicated by device labels 610 shown on the map section 700 and the visible video section 710. The ground control system 330 may display the position and location data by estimating the coordinates of the four corners of the video frame using the coordinates of the drone 310's location when a particular visible video frame was captured, then factoring those along with the camera's shooting angle, the elevation of the camera from the ground, and the distance from the camera to the field, all communicated by sensors on the drone 310. The ground control system 330 may match the coordinates of the four corner points against the same coordinates on the map and then overlay relevant video over the map.

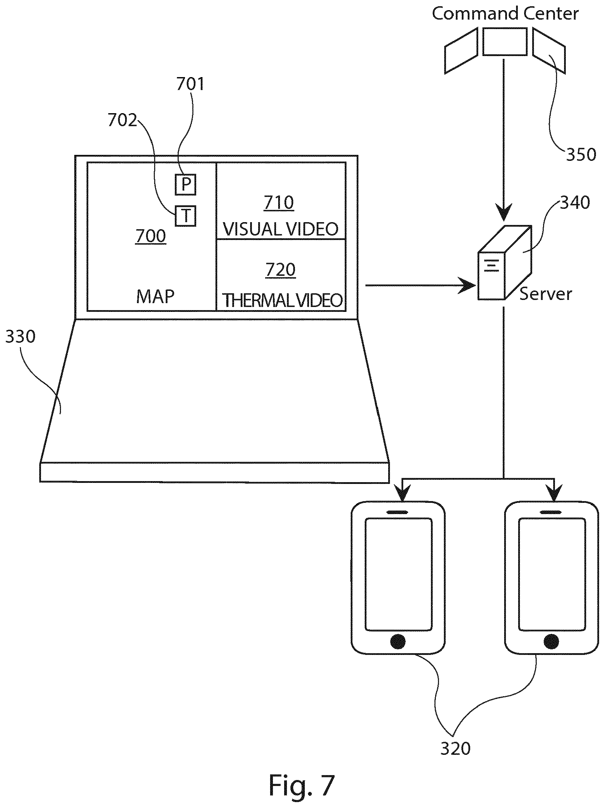

FIG. 7 is a diagram showing the real-time transmission of commands and annotation data to all communications devices 320. Commands and annotation data may be communicated by a user operating the ground control system 330 or the command center 350. By way of example, FIG. 7 shows commands and annotation data communicated using the ground control system 330. The ground control system 330 may include a display divided into sections 700, 710, 720. The user may select an icon or button within the user interface of the ground control system 330 in order to create commands or annotations. Selecting a drawing button 701 may enable the user to draw shapes, lines, or free forms within the map section 700. Selecting a text button 702 may enable the user to insert text within the map section 700. The user may make any desired commands or annotations to the map. The ground control system 330 may transmit the commands and annotations to the communications server 340 in real time. The communications server 340 may transmit the commands and annotations to any authorized receiving devices, including communications devices 320 for immediate display on the devices. The communications devices 320 may display the commands and annotations on a map or video feed in the same way they were added by the user of the ground control system 330.

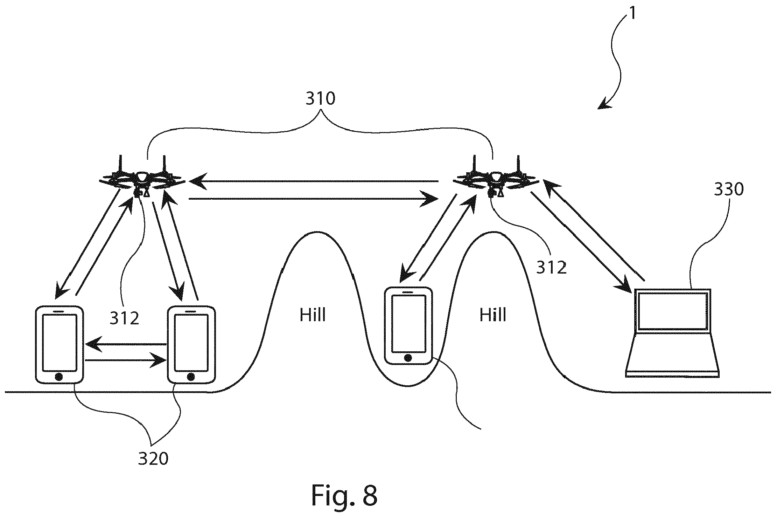

FIG. 8 is a diagram showing the drone communications system 1 in a configuration where the communications server and other networks cannot be reached, in accordance with the first exemplary embodiment of the present disclosure. In particular, FIG. 8 illustrates a situation where the communication server cannot be reached, and where network connections such as the Internet cannot be reached. For example, this may be the situation when the system 1 is operated in remote locations or where geographic obstacles, like hills, valleys, and mountains, may disrupt normal signal transmission. In these situations, the system 1 may use a mesh network with a plurality of nodes to relay the data stream to the ground control station 330 or to other devices.

As shown in FIG. 8, one or more drones 310 may be operated in an aerial position to sense data with onboard sensors 312, which eventually is relayed to communications devices 320 and/or a ground control station 330, as described relative to FIGS. 1-7. All of the communications shown herein may be transmitted and received in real time or near real-time, which is to say without significant delay between the data being collected and a user being able to view the data. In one example, the delay may be less than one second between data collection and user viewing on any or all devices. Preferably, the delay may be less than half of one second. Even more preferably, the delay may be less than 0.3 seconds. Additionally, all of the data within the communications may be synchronized. In other words, multiple video transmissions from a number of devices within the network may be synchronized so that a user viewing the multiple videos simultaneously may view each video at the same standard time. Sensor and other device data may be synchronized as well. This may provide users with time-accurate video and other data from the field.

In one example, aerial imagery and aerial data from drone 310 to communications devices 320 may be transmitted in real time via direct encrypted radio frequency. For example, a drone 310 may record high definition visible video, thermal video using infrared or thermal sensors, and other metadata using onboard sensors, then encode the data with the video, resize the multiple video feeds to optimally fit the displays of communications devices 320 within the network, and stream the encoded video to communications devices 320 and the ground control station 330 via direct radio frequency link. The ground control station 330 may receive the encoded video, decode it, store it on digital storage, and display the video with the included metadata on a screen for the ground control operators to use.

Communications devices 320 may receive the encoded stream and may display or otherwise process the data contained therein. Simultaneously, the communications devices 320 may be collecting data through cameras or other sensors in the field. This data and associated metadata may be encoded together, transmitted to the drone 310 and other communications devices 320 which act as nodes and are within line of sight from each other. These nodes receive and transmit, or relay, the stream to other drones 310 and/or other communications devices 320 within line of sight until the stream reaches the ground control system 330. As can be seen, the various nodes can be positioned in different locations relative to a geographic feature, such that signal transmission can be successful even to communications devices 320 positioned within valleys or in otherwise difficult signal transmission locations. Any number or positioning of nodes may be used together to form a mesh network.

In another example, communications devices 320 in the field may include GPS tracking hardware. Communications devices 320 having GPS tracking hardware may transmit a data stream including a device or user identifier, GPS coordinates, rate and direction of travel, and other location data to the drone 310 and other communications devices 320 which relay the data until it reaches the ground control station 330. The ground control station 330 may process the location data for transmission to authorized communications devices 320 via the mesh network. Such processing may include encryption, password protection, or other forms of selective authorization. Any devices receiving the location data may display the operatives' ID, rate and direction of travel, historical trajectories, and the like therein. In one example, the location data may be visually overlaid over drone videos, maps, or other images representing the field. This may enable field operatives and commanders to easily determine the current positions as well as past movements of any users and devices in the field. In another example, location data may be relayed through auditory or tactile processes. Location data may be synchronized across all authorized devices upon receiving the location data transmission. This may allow all authorized users to see real-time location data for relevant field operatives.

In another example, commands and other annotations may be transmitted from users of a ground control system 330 to one or more communications devices 320 within the mesh network. A user of the ground control system 330 may enter commands by use of mouse, keyboard, touchscreen, voice dictation, or other means. The user may include text or other visual annotations by typing, placing images onto the map or video, or drawing. The commands and annotations may be transmitted to the communications devices 320 via the nodes in the mesh network. The authorized communications devices 320 may receive the commands and annotations and display or otherwise process them. In one example the commands and annotations may be overlaid on one or more drone video feeds, maps, or other visual representations of the field. Examples of annotations may include labels, drawings, enhancement of specific areas or items, and the like. For instance, an item identified as a hazardous material on the map may be annotated as such so that field operatives can use caution around the item. Examples of commands may include text instruction, directional indicators, waypoints, target markers, and the like. For instance, a user may instruct a field operative to proceed to a target via a certain direction and engage. The field operative may see directional arrows, waypoint markers, and a target indicator appear on his device's display. Commands may additionally include text, voice messaging and voice call, which may be displayed in a separate portion of the user interface. Commands and annotations may be automatically synchronized to all authorized devices upon receiving the transmission.

In another example, an administrator of the mesh network may communicate administrative changes to system settings in real time. An administrator may be a user at the ground control system 330, or a communications device 320. The administrator may communicate directly with the other drone operators 310 and communications devices 320 with instructions to grant, deny, or cancel authorized access of any device to data or other devices within the mesh network. The ground control station 330 may transmit these instructions to all devices within the mesh network, which may receive the instructions and execute them accordingly.

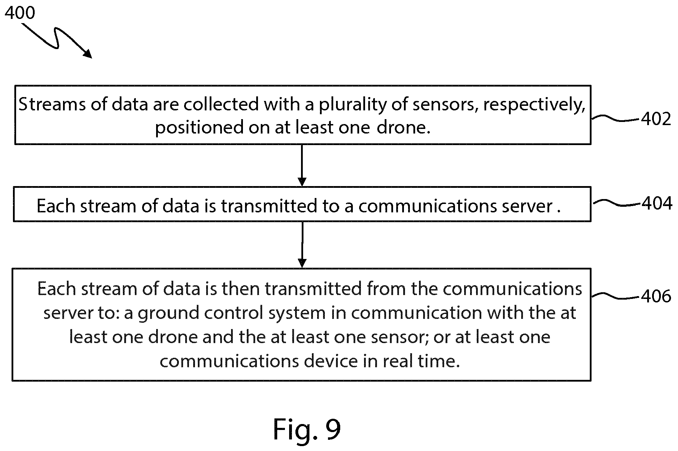

FIG. 9 is a flowchart 400 illustrating a method of communicating data from a drone, in accordance with the first exemplary embodiment of the present disclosure. It should be noted that any process descriptions or blocks in flow charts should be understood as representing modules, segments, portions of code, or steps that include one or more instructions for implementing specific logical functions in the process, and alternate implementations are included within the scope of the present disclosure in which functions may be executed out of order from that shown or discussed, including substantially concurrently or in reverse order, depending on the functionality involved, as would be understood by those reasonably skilled in the art of the present disclosure.

As is shown by block 402, streams of data are collected with a plurality of sensors, respectively, positioned on at least one drone. Each stream of data is transmitted to a communications server (block 404). Each stream of data is then transmitted from the communications server to: a ground control system in communication with the at least one drone and the at least one sensor; or at least one communications device in real time (block 406). The method may further include any number of additional steps, processes, functions, or features, including any disclosed relative to FIGS. 1-8 herein. For example, each stream of data from the plurality of sensors may be combined into a single stream, wherein the single stream is transmitted to the communications server. Each stream of data may be transmitted to at least two communications devices located remote from one another. The stream of data may further comprise a visual image captured from a position of the at least one drone. The visual image captured from the position of the at least one drone may be displayed on the at least one communications device. At least one annotation may be visually overlaid on the visual image. Additionally, a location of the at least one communications device may be visually overlaid on a visual image captured from a position of the at least one drone.

It should be emphasized that the above-described embodiments of the present disclosure, particularly, any "preferred" embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A drone communications system, comprising:
• at least one drone having a plurality of sensors, wherein each of the plurality of sensors collects a stream of data;
• a ground control system in communication with the at least one drone and the plurality of sensors;
• at least one communications device; and
• a communications server in communication with the at least one drone, the ground control system, and the at least one communications device, wherein each stream of data from the plurality of sensors is transmitted to the communications server, and wherein the communications server transmits the stream to the ground control system and at least one communications device in real time.

2. The system of claim 1, wherein each stream of data from the plurality of sensors is combined to a single stream, wherein the single stream is transmitted to the communications server.

3. The system of claim 1, wherein each stream of data is transmitted to at least two communications devices located remote from one another.

4. The system of claims 1 or 2, wherein the stream of data further comprises at least one visual image captured from a position of the at least one drone.

5. The system of claim 4, wherein the at least one visual image captured from the position of the at least one drone is displayed on at least one of: the ground control station or the at least one communications device.

6. The system of claim 5, further comprising at least one annotation visually overlaid on the at least one visual image, wherein the at least one visual image further comprises a map showing at least one of: a position of the at least one drone or a GPS location of other communications devices.

7. The system of claims 1, 2, 3, 4, 5, or 6, wherein the at least one communications device further comprises at least one of: a smart phone, a tablet computer, a smart watch, a laptop, an augment reality computerized device, a virtual reality computerized device, a wearable computerized device, a through-the-wall radar device, or a computerized device with a plurality of sensors, and wherein at least one visual image taken by the at least one communications device is transmitted to the communications server, wherein the communications server transmits the at least one visual image to the ground control system.

8. The system of claims 1, 2, 3, 4, 5, 6, or 7, wherein the at least one communications device has at least one GPS chip therein, wherein a location of the at least one communications device is visually overlaid on a visual image captured from a position of the at least one drone.

9. A drone communications system, comprising:
• at least one drone having a plurality of sensors, wherein each of the plurality of sensors collects a stream of data;
• a ground control system in communication with the at least one drone and the plurality of sensors;
• at least one communications device; and
• a communications server in communication with the ground control system, and the at least one communications device, wherein each stream of data from the plurality of sensors is transmitted to the ground control system, wherein the ground control system transmits the stream of data to the communications server, and wherein the communications server transmits the stream of data to at least one communications device in real time.

10. The system of claim 9, wherein each stream of data from the plurality of sensors is transmitted to the ground control system via nodes in a mesh network, wherein the nodes are capable of receiving the stream of data and transmitting the stream of data to: another node, another sensor, or a drone.

11. The system of claims 9 or 10, wherein the stream of data further comprises sensed data and associated metadata, wherein the sensed data and the associated metadata are encoded together into the stream of data.

12. The system of claims 9, 10, or 11, wherein each stream of data from the plurality of sensors is combined to a single stream, wherein the single stream is transmitted to the ground control station.

13. The system of claims 9, 10, 11, or 12, wherein the stream of data further comprises a visual image captured from a position of the at least one drone.

14. A method of communicating data from a drone, the method comprising:
• collecting streams of data with a plurality of sensors, respectively, positioned on at least one drone;
• transmitting each stream of data to a communications server; and
• transmitting each stream of data from the communications server to: a ground control system in communication with the at least one drone and the at least one sensor; or at least one communications device in real time.

15. The method of claim 14, further comprising combining each stream of data from the plurality of sensors into a single stream, wherein the single stream is transmitted to the communications server.
